# EUROPÄISCHE PATENTANMELDUNG

(11) **EP 4 729 892 A1**
(43) Veröffentlichungstag der Anmeldung: **22.04.2026**
(21) Anmeldenummer: 25202918.6
(22) Anmeldetag: 18.09.2025
(51) Int. Cl.: G01D 5/244, G01D 5/347

(54) **DREHGEBER ZUM ERFASSEN VON INFORMATIONEN EINER ROTIERBAREN WELLE**

(30) Priorität: 15.10.2024 DE 102024129919
(71) Anmelder: Baumer Germany GmbH & Co. KG, 78333 Stockach (DE)
(72) Erfinder: Hippeli, Julian, 13627 Berlin (DE); Volkmann, Danny, 10559 Berlin (DE)
(74) Vertreter: Strauss, Steffen

(57) **Zusammenfassung**

Die Erfindung betrifft einen Drehgeber (100) zum Erfassen von Positions- und/oder Bewegungsinformationen einer rotierbaren Welle (160). Der Drehgeber (100) umfasst eine Hohlwelle (150), welche ausgebildet ist, ein freies Ende der rotierbaren Welle (160) aufzunehmen und derart an der rotierbaren Welle (160) befestigt zu werden, dass die Hohlwelle (150) mit der rotierbaren Welle (160) mit rotiert. Ferner umfasst der Drehgeber (100) ein Gehäuse (140), welches in axialer Richtung radial um die Hohlwelle (150) angeordnet ist, um die Hohlwelle (150) rotierbar zu lagern und wenigstens ein elektronisches Bauteil (125a) zum Erfassen der Positions- und Bewegungsinformationen der rotierbaren Welle (160) zu behausen, sowie einen Gehäusedeckel (110), welcher abnehmbar an dem Gehäuse (140) angebracht ist. Der Drehgeber (100) umfasst ferner eine Abdeckplatte (122), welche an dem Gehäuse (140) angebracht ist und durch welche sich ein Abschnitt der Hohlwelle (150) in axialer Richtung derart von dem Gehäuse (140) weg erstreckt, dass bei abgenommenen Gehäusedeckel (110) die Abdeckplatte (122) Zugang zu dem Abschnitt der Hohlwelle (150) gewährt, um die Hohlwelle (150) an dem freien Ende der rotierbaren Welle (160) zu befestigen, und das wenigstens eine elektronische Bauteil (125a) vor Beschädigungen und/oder Verschmutzungen von außen geschützt ist.

## Beschreibung

Die Erfindung betrifft einen Drehgeber zum Erfassen von Informationen einer rotierbaren Welle, beispielsweise Positions- und/oder Bewegungsinformationen der rotierbaren Welle.

Drehgeber dienen dazu, Messgrößen wie Winkelstellung, Drehzahl, Drehrichtung und/oder Winkelbeschleunigung einer rotierenden Welle einer Maschine, beispielsweise eines Antriebes, zu erfassen und an eine Steuerung zum Steuern bzw. Regeln der Maschine zu übermitteln. Hierbei können die Drehgeber auch dazu genutzt werden, die erfassten Messgrößen zwischenzuspeichern und über eine statistische Auswertung eine Zustandsüberwachung durchzuführen. In der Regel werden die erfassten Messgrößen als elektrisch codierte Signale an eine Steuerung übermittelt, wozu in der Regel ein elektrischer Anschluss des Drehgebers an eine Energieversorgung und an die Steuerung erforderlich ist.

Bei der Montage eines Drehgebers an einer Maschine wird häufig der Drehgeber zunächst ohne einen zugehörigen Anschluss für die Kontaktierung des elektronischen Anschlusses montiert, da die Konfektionierung des elektronischen Anschlusses separat, örtlich getrennt erfolgt. Bei einem herkömmlichen Drehgeber besteht daher das Problem, dass empfindliche elektronische Bauteile des Drehgebers, insbesondere elektronische Bauteile zur Erfassung der Messgrößen der rotierenden Welle der Maschine vor und bei der Montage Beschädigungen und/oder Verschmutzungen von außen ausgesetzt sind.

Es ist daher eine Aufgabe der vorliegenden Erfindung, einen verbesserten Drehgeber bereitzustellen, bei welchem vor und bei der Montage empfindliche elektronische Bauteile des Drehgebers, insbesondere elektronische Bauteile zur Erfassung der Messgrößen der rotierenden Welle vor Beschädigungen und/oder Verschmutzungen von außen geschützt sind.

Diese Aufgabe wird erfindungsgemäß durch einen Drehgeber zum Erfassen von Positions- und/oder Bewegungsinformationen einer rotierbaren Welle gelöst, wobei der Drehgeber eine Hohlwelle umfasst, welche ausgebildet ist, ein freies Ende der rotierbaren Welle aufzunehmen und derart an der rotierbaren Welle befestigt zu werden, dass die Hohlwelle mit der rotierbaren Welle mit rotiert, d.h. an der Rotationsbewegung der rotierbaren Welle teilnimmt. Der Drehgeber umfasst ferner ein Gehäuse, welches hinsichtlich einer Rotationsachse der rotierbaren Welle und der Hohlwelle in axialer Richtung radial um die Hohlwelle angeordnet ist, um die Hohlwelle rotierbar zu lagern und wenigstens ein elektronisches Bauteil zum Erfassen der Positions- und Bewegungsinformationen der rotierbaren Welle zu behausen. Ferner umfasst der Drehgeber einen Gehäusedeckel, welcher abnehmbar an dem Gehäuse angebracht ist, und eine Abdeckplatte, welche an dem Gehäuse angebracht ist und durch welche sich ein Abschnitt der Hohlwelle in axialer Richtung derart von dem Gehäuse weg erstreckt, dass bei abgenommenen Gehäusedeckel die Abdeckplatte Zugang zu dem Abschnitt der Hohlwelle gewährt, um die Hohlwelle an dem freien Ende der rotierbaren Welle zu befestigen, und das wenigstens eine elektronische Bauteil vor Beschädigungen und/oder Verschmutzungen von außen geschützt ist.

In einer Ausführungsform umfasst der Drehgeber ferner eine abnehmbare Schutzkappe, welche an der Abdeckplatte angebracht ist, um den Abschnitt der Hohlwelle abzudecken.

Gemäß einer Ausführungsform umfasst der Drehgeber ferner eine Verliersicherung, über welche die Schutzkappe verliersicher an der Abdeckplatte oder dem Gehäuse befestigt ist.

In einer Ausführungsform weist die abnehmbare Schutzkappe einen Bajonett-Verschluss auf, über welchen die abnehmbare Schutzkappe an der Abdeckplatte angebracht ist.

Gemäß einer Ausführungsform weist die abnehmbare Schutzkappe einen umlaufenden Flansch auf, welcher ausgebildet ist, an der Abdeckplatine anzuliegen.

In einer Ausführungsform ist die Abdeckplatte in Form einer Abdeckplatine ausgebildet ist, wobei auf der Abdeckplatine ein elektrischer Anschlussstecker ausgebildet ist, der bei abgenommenen Gehäusedeckel von außen frei zugänglich ist und elektrisch mit dem wenigstens einen elektronischen Bauteil zum Erfassen der Positions- und Bewegungsinformationen der rotierbaren Welle verbunden ist.

Gemäß einer Ausführungsform weist der Gehäusedeckel einen öffenbaren Zugang auf, wobei der öffenbare Zugang ausgebildet ist, dass ein elektrisches Anschlusskabel durch den geöffneten öffenbaren Zugang geführt wird, um das elektrische Anschlusskabel mit dem elektrischen Anschlussstecker zu verbinden.

In einer Ausführungsform umfasst der Drehgeber eine Bauteilplatine, welche in dem Gehäuse angeordnet ist, wobei die Bauteilplatine elektrisch mit dem elektrischen Anschlussstecker verbunden ist und auf der Bauteilplatine das wenigstens eine elektronische Bauteil ausgebildet ist.

Gemäß einer Ausführungsform weist die Abdeckplatte ein radial zentrales Loch auf, durch welches sich der Abschnitt der Hohlwelle in axialer Richtung von dem Gehäuse weg erstreckt.

In einer Ausführungsform umfasst das Gehäuse einen ersten Gehäuseteil und einen zweiten Gehäuseteil, wobei die Abdeckplatte an dem ersten Gehäuseteil angebracht ist und wobei der zweite Gehäuseteil ausgebildet ist, die Hohlwelle rotierbar zu lagern.

Im Folgenden wird die Erfindung anhand von Ausführungsbeispielen und den Figuren näher beschrieben. In den Figuren zeigen:
- Fig. 1: eine Querschnittsansicht eines an einer rotierbaren Welle angebrachten Drehgebers gemäß einer Ausführungsform;
- Fig. 2: eine perspektivische Explosionsdarstellung eines Drehgebers gemäß einer Ausführungsform; und
- Fig. 3: perspektivische Ansichten mehrerer Arbeitsschritte bei der Montage eines Drehgebers gemäß einer Ausführungsform.

In der folgenden ausführlichen Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

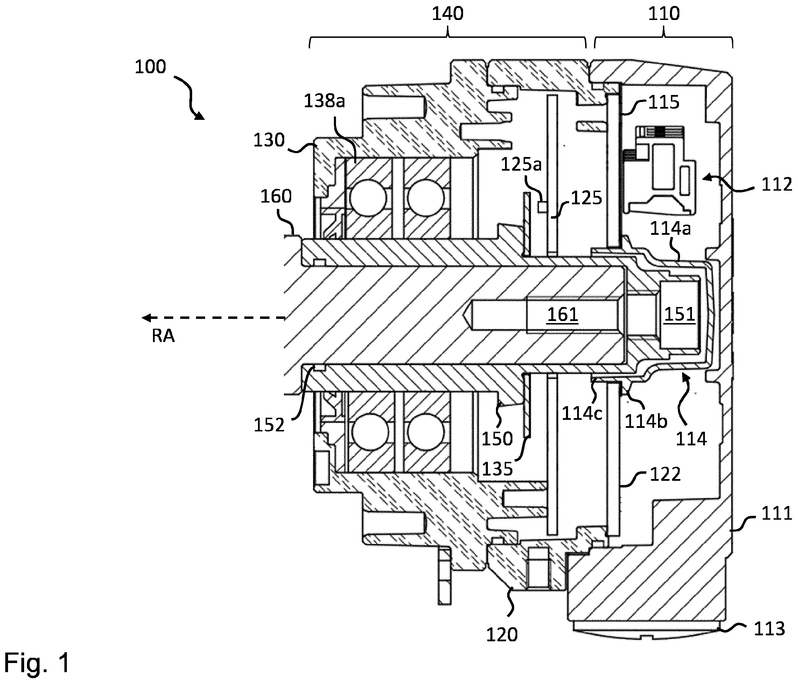

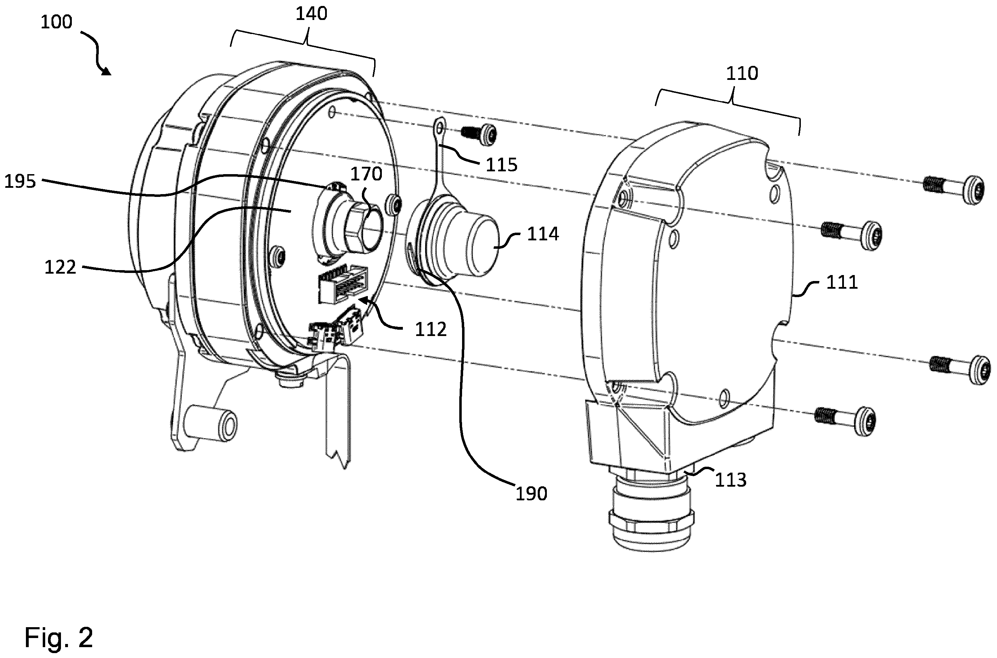

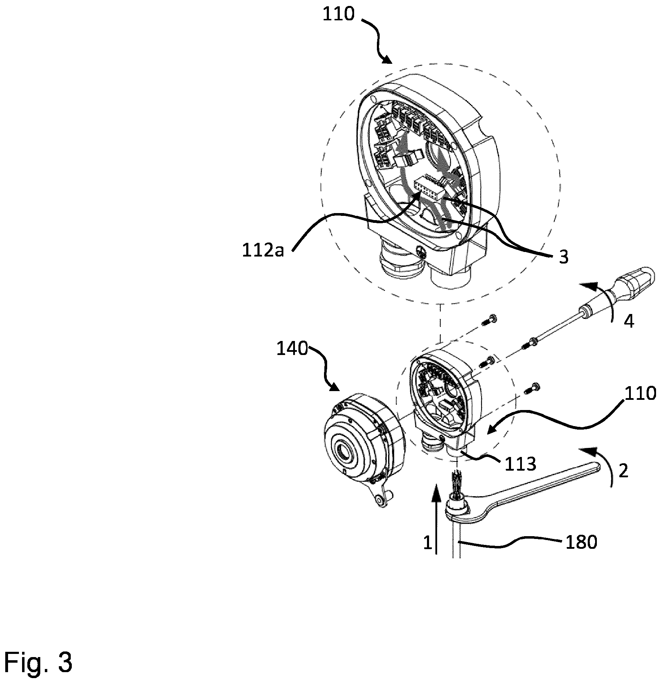

Die Figur 1 zeigt eine Querschnittsansicht eines an einer rotierbaren Welle 160 einer Maschine angebrachten Drehgebers 100 gemäß einer Ausführungsform, der in Figur 2 in einer Explosionsdarstellung gezeigt ist. Figur 3 zeigt mehrere perspektivische Ansichten zur Illustration von Arbeitsschritten bei der Montage des Drehgebers 100 gemäß einer Ausführungsform, wie diese nachstehend im Detail beschrieben werden.

Der Drehgeber 100 ist ausgebildet, Positions- und/oder Bewegungsinformationen der um die Rotationsachse RA rotierbaren Welle 160, beispielsweise in Form einer Antriebswelle 160, einer Maschine zu erfassen. Bei den Positions- und/oder Bewegungsinformationen der rotierbaren Welle 160 kann es sich beispielsweise um eine Winkelstellung, Drehzahl, Drehrichtung und/oder Winkelbeschleunigung der rotierbaren Welle 160 handeln.

Wie sich insbesondere Figur 1 entnehmen lässt, umfasst der Drehgeber 100 eine Hohlwelle 150, welche ausgebildet ist, ein freies Ende der rotierbaren Welle 160 aufzunehmen und derart an der rotierbaren Welle 160 befestigt zu werden, dass die Hohlwelle 150 mit der rotierbaren Welle 160 mit rotiert. Bei der in Figur 1 dargestellten Ausführungsform ist hierzu in dem freien Ende der rotierbaren Welle 160 und in der Hohlwelle 150 eine jeweilige Aussparung 161, 151 vorgesehen, um die Hohlwelle 150 bei der Montage mittels eines Sechskants 170 (der in Figur 2 dargestellt ist) und einer Schraube an dem freien Ende der rotierbaren Welle 160 befestigen zu können, wobei die Hohlwelle beim Anziehen der Schraube gegen ein Mitdrehen fixiert wird. An dem der rotierbaren Welle 160 zugewandten Ende der Hohlwelle 150 kann eine umlaufende Aussparung 152 vorgesehen sein, um beispielsweise eine Dichtung, insbesondere einen O-Ring aufzunehmen.

Der Drehgeber 100 umfasst ferner ein Gehäuse 140, welches, wie in Figur 1 dargestellt, hinsichtlich der Rotationsachse RA der rotierbaren Welle 160 in axialer Richtung radial um die Hohlwelle 150 angeordnet ist, um die Hohlwelle 150 rotierbar zu lagern und wenigstens ein elektronisches Bauteil 125a zum Erfassen der Positions- und Bewegungsinformationen der rotierbaren Welle 160 zu behausen. Zur rotierbaren Lagerung der Hohlwelle 150 in dem Gehäuse 140 umfasst der Drehgeber eine Vielzahl von Kugellagern (von denen ein Lager 138a in Figur 1 gekennzeichnet ist), welche in dem Gehäuse 140 um die Hohlwelle 150 herum angeordnet sind. An der rotierbar gelagerten Hohlwelle 150 ist eine Codierscheibe 135 derart befestigt, dass sich die Codierscheibe 135 in dem Gehäuse 140 mit der Hohlwelle 150 mitrotiert. Diese Rotation wird von dem elektronischen Bauteil 125a, beispielsweise einem optischen Sensor 125a, erfasst, um die Positions- und/oder Bewegungsinformationen der um die Rotationsachse RA rotierbaren Welle 160 zu bestimmen.

Der Drehgeber 100 umfasst ferner einen Gehäusedeckel 110 mit einem Gehäuse 111, welcher abnehmbar an dem Gehäuse 140 angebracht ist (beispielsweise mittels der in Figur 2 dargestellten Schrauben), wobei Figur 1 den Drehgeber 100 mit an dem Gehäuse 140 angebrachten Gehäusedeckel 110 zeigt. Erfindungsgemäß umfasst der Drehgeber 100 ferner eine Abdeckplatte 122, welche an dem Gehäuse 140 angebracht ist und welche dadurch eine Wand des Gehäuses 140 ausbildet. Wie sich den Figuren 1 und 2 entnehmen lässt, erstreckt sich durch die Abdeckplatte 122 ein Abschnitt der Hohlwelle 150 in axialer Richtung derart von dem Gehäuse 140 weg, dass bei abgenommenen Gehäusedeckel 110 die Abdeckplatte 122 Zugang zu dem Abschnitt der Hohlwelle 150 gewährt, um die Hohlwelle 150 an dem freien Ende der rotierbaren Welle 160 zu befestigen, und das wenigstens eine elektronische Bauteil 125a vor Beschädigungen und/oder Verschmutzungen von außen geschützt ist. Bei der in den Figuren 1 und 2 dargestellten Ausführungsform, weist die Abdeckplatte 122 ein radial zentrales im Wesentlichen kreisförmiges Loch 195 auf, durch welches sich der Abschnitt der Hohlwelle 150 in axialer Richtung von dem Gehäuse 140 und der Abdecklatte 122 weg erstreckt.

Ein weiterer Schutz wird dadurch erreicht, dass der Drehgeber 100 ferner eine abnehmbare Schutzkappe 114 umfassen kann, welche an der Abdeckplatte 122 angebracht ist, um den aus der Abdeckplatte 122 herausstehenden Abschnitt der Hohlwelle 150 abzudecken. Wie in Figur 1 dargestellt, kann die abnehmbare Schutzkappe 114 einen Kappenkörper 114a, einen Kappenmantel 114c und einen umlaufenden Kappenflansch 114b aufweisen, welcher ausgebildet ist, an der Abdeckplatte 122 anzuliegen. Wie in Figur 2 dargestellt, kann der Drehgeber 100 für die Schutzkappe 114 eine Verliersicherung 115 beispielsweise in Form eines Kunststoffbandes 115, über welche die Schutzkappe 114 verliersicher an der Abdeckplatte 122 oder dem Gehäuse 140 befestigt ist. Wie ferner in Figur 2 dargestellt, kann die abnehmbare Schutzkappe 114 beispielsweise einen Bajonett-Verschluss 190 aufweisen, über welchen die abnehmbare Schutzkappe 114 an der Abdeckplatte 122 angebracht und wieder abgenommen werden kann. Die Schutzkappe 114 kann aus einem Kunststoffmaterial, beispielsweise aus dem Kunststoff PA66, einem Metall oder Keramikmaterial bestehen. Die Verliersicherung 115 kann aus einem elastischen Material und/oder Dichtmaterial gestanzt sein. Besonders bevorzugt ist es, wenn auf einer Seite der auf der Abdeckplatte 122 aufliegenden Verliersicherung 115 eine Gleitbeschichtung und auf der anderen Seite der Verliersicherung 115 eine Dichtfläche ausgebildet ist.

Bei der in den Figuren 1 und 2 dargestellten Ausführungsform ist die Abdeckplatte 122, welche eine Wand des Gehäuses 140 ausbildet, vorzugsweise in Form einer Abdeckplatine bzw. Abdeck-PCB 122 ausgebildet ist, wobei auf der Abdeckplatine 122 ein elektrischer Anschlussstecker, insbesondere Steckverbinder112 ausgebildet ist, der bei abgenommenen Gehäusedeckel 110 von außen frei zugänglich ist und elektrisch mit dem wenigstens einen elektronischen Bauteil 125a zum Erfassen der Positions- und Bewegungsinformationen der rotierbaren Welle 160 verbunden ist. Bei dieser Ausführungsform hat die Abdeckplatine 122 somit nicht nur die Funktion, die empfindlichen elektronischen Bauteile 125a im Gehäuse 140 des Drehgebers 100 vor Beschädigungen und/oder Verunreinigungen zu schützen, sondern noch die weitere Funktion, diese elektronischen Bauteile 125a von außen beispielsweise mit einer Energieversorgung und/oder Steuerung verbinden zu können. Hierzu weist der Gehäusedeckel 110 vorzugsweise einen öffenbaren Zugang 113, durch den, wie in den Figuren 2 und 3 dargestellt, bei der Montage ein elektrisches Anschlusskabel 180 geführt werden kann, um das elektrische Anschlusskabel 180 mit dem elektrischen Anschlussstecker 112 auf der Abdeckplatine 122 zu verbinden.

Bei der in Figur 1 dargestellten Ausführungsform umfasst der Drehgeber 100 eine Bauteilplatine bzw. Bauteil-PCBA 125, welche in dem Gehäuse 140 angeordnet ist, wobei die Bauteilplatine 125 elektrisch mit dem elektrischen Anschlussstecker 112 verbunden ist und auf der Bauteilplatine 125 das wenigstens eine elektronische Bauteil 125a ausgebildet ist. Ferner ist bei der in Figur 1 dargestellten Ausführungsform das Gehäuse zweiteilig ausgebildet, d.h. umfasst einen ersten Gehäuseteil 120 und einen zweiten Gehäuseteil 130, wobei die Abdeckplatte 122 an dem ersten Gehäuseteil 120 des Gehäuses 140 angebracht ist und wobei der zweite Gehäuseteil 130 ausgebildet ist, die Hohlwelle 150 rotierbar zu lagern. Die Ausbildung des Drehgebers 100 mit der Abdeckplatte 122, insbesondere Abdeckplatine 122 und der separaten Bauteilplatine 125 erlaubt eine kompaktere Bauform des Drehgebers um die rotierbare Welle 160. Ferner ermöglicht die Zweiteilung des Gehäuses 140 in den ersten Gehäuseteil 120 und den zweiten Gehäuseteil 130 eine kompaktere Bauform des Drehgebers 100, d.h. einen kleineren Durchmesser. Außerdem ist die Montage, insbesondere das Ausrichten der Codierscheibe 135, dadurch einfacher.

Wie bereits vorstehend erwähnt, zeigt Figur 3 mehrere perspektivische Ansichten zur Illustration von Arbeitsschritten bei der Montage des Drehgebers 100 gemäß einer Ausführungsform. In einem mit der Ziffer "1" beschrifteten ersten Schritt wird bei abgeschraubten Gehäusedeckel 110 ein Anschlusskabel 180 durch den geöffneten Zugang 113 in den Gehäusedeckel 110 eingebracht und in einem mit der Ziffer "2" beschrifteten zweiten Schritt befestigt, beispielsweise in Form einer Kabelverschraubung. In einem mit der Ziffer "3" sowie zwei Pfeilen dargestellten dritten Schritt wird das in den Gehäusedeckel 110 eingebrachte Anschlusskabel 180 elektrisch verbunden. In einem mit der Ziffer "4" beschrifteten vierten Schritt wird der Gehäusedeckel 110 wieder an dem Gehäuse 140 mittels Schrauben befestigt. In einer weiteren Ausführungsform kann auch in dem Gehäusedeckel 110 eine Gehäusedeckelplatine bzw. Gehäusedeckel-PCBA ausgebildet sein (wie dies in Figur 3 angedeutet ist), auf der Push-In-Steckerklemmen zur Aufnahme der Litzen des Anschlusskabels 180 ausgebildet sind. Bei dieser Ausführungsform ist auf der Abdeckplatine 122 der Steckverbinder 112 ausgebildet (wie dies in Figur 2 dargestellt ist), der beim Aufsetzen des Gehäusedeckels 110 auf das Gehäuse 140 über einen entsprechenden Steckverbinder 112a im Gehäusedeckel 110 kontaktiert wird.

## Patentansprüche

1. Drehgeber (100) zum Erfassen von Positions- und/oder Bewegungsinformationen einer rotierbaren Welle (160), wobei der Drehgeber (100) umfasst:
eine Hohlwelle (150), welche ausgebildet ist, ein freies Ende der rotierbaren Welle (160) aufzunehmen und derart an der rotierbaren Welle (160) befestigt zu werden, dass die Hohlwelle (150) mit der rotierbaren Welle (160) mit rotiert;
ein Gehäuse (140), welches in axialer Richtung radial um die Hohlwelle (150) angeordnet ist, um die Hohlwelle (150) rotierbar zu lagern und wenigstens ein elektronisches Bauteil (125a) zum Erfassen der Positions- und Bewegungsinformationen der rotierbaren Welle (160) zu behausen;
einen Gehäusedeckel (110), welcher abnehmbar an dem Gehäuse (140) angebracht ist; und
eine Abdeckplatte (122), welche an dem Gehäuse (140) angebracht ist und durch welche sich ein Abschnitt der Hohlwelle (150) in axialer Richtung derart von dem Gehäuse (140) weg erstreckt, dass bei abgenommenen Gehäusedeckel (110) die Abdeckplatte (122) Zugang zu dem Abschnitt der Hohlwelle (150) gewährt, um die Hohlwelle (150) an dem freien Ende der rotierbaren Welle (160) zu befestigen, und das wenigstens eine elektronische Bauteil (125a) vor Beschädigungen und/oder Verschmutzungen von außen geschützt ist.

2. Drehgeber (100) nach Anspruch 1, wobei der Drehgeber (100) ferner eine abnehmbare Schutzkappe (114) umfasst, welche an der Abdeckplatte (122) angebracht ist, um den Abschnitt der Hohlwelle (150) abzudecken.

3. Drehgeber (100) nach Anspruch 2, wobei der Drehgeber (100) ferner eine Verliersicherung (115) umfasst, über welche die Schutzkappe (114) verliersicher an der Abdeckplatte (122) oder dem Gehäuse (140) befestigt ist.

4. Drehgeber (100) nach Anspruch 2 oder 3, wobei die abnehmbare Schutzkappe (114) einen Bajonett-Verschluss (190) aufweist, über welchen die abnehmbare Schutzkappe (114) an der Abdeckplatte (122) angebracht ist.

5. Drehgeber (100) nach einem der Ansprüche 2 bis 4, wobei die abnehmbare Schutzkappe (114) einen umlaufenden Flansch (114b)aufweist, welcher ausgebildet ist, an der Abdeckplatte (122) anzuliegen.

6. Drehgeber (100) nach einem der vorhergehenden Ansprüche, wobei die Abdeckplatte (122) in Form einer Abdeckplatine (122) ausgebildet ist und wobei auf der Abdeckplatine (122) ein elektrischer Anschlussstecker (112) ausgebildet ist, der bei abgenommenen Gehäusedeckel (110) von außen frei zugänglich ist und elektrisch mit dem wenigstens einen elektronischen Bauteil (125a) zum Erfassen der Positions- und Bewegungsinformationen der rotierbaren Welle (160) verbunden ist.

7. Drehgeber (100) nach Anspruch 6, wobei der Gehäusedeckel (110) einen öffenbaren Zugang (113) aufweist und wobei der öffenbare Zugang (113) ausgebildet ist, dass ein elektrisches Anschlusskabel (180) durch den geöffneten öffenbaren Zugang geführt ist, um das elektrische Anschlusskabel (180) mit dem elektrischen Anschlussstecker (112) zu verbinden.

8. Drehgeber (100) nach Anspruch 6 oder 7, wobei der Drehgeber (100) eine Bauteilplatine (125) umfasst, welche in dem Gehäuse (140) angeordnet ist, wobei die Bauteilplatine (125) elektrisch mit dem elektrischen Anschlussstecker (112) verbunden ist und auf der Bauteilplatine (125) das wenigstens eine elektronische Bauteil (125a) ausgebildet ist.

9. Drehgeber (100) nach einem der vorhergehenden Ansprüche, wobei die Abdeckplatte (122) ein radial zentrales Loch (195) aufweist, durch welches sich der Abschnitt der Hohlwelle in axialer Richtung von dem Gehäuse (140) weg erstreckt.

10. Drehgeber (100) nach einem der vorhergehenden Ansprüche, wobei das Gehäuse (140) einen ersten Gehäuseteil (120) und einen zweiten Gehäuseteil (130) umfasst, wobei die Abdeckplatte (122) an dem ersten Gehäuseteil (120) angebracht ist und wobei der zweite Gehäuseteil (130) ausgebildet ist, die Hohlwelle (150) rotierbar zu lagern.
